# EUROPEAN PATENT APPLICATION

(11) **EP 4 401 350 A1**
(43) Date of publication of application: **17.07.2024**
(21) Application number: 22875125.1
(22) Date of filing: 29.09.2022
(51) Int. Cl.: H04L 5/00

(54) **COMMUNICATION METHOD AND COMMUNICATION APPARATUS**

(30) Priority: 30.09.2021 CN 202111160969
(71) Applicant: Huawei Technologies Co., Ltd., Shenzhen, Guangdong 518129 (CN)
(72) Inventor: HUA, Meng, Shenzhen, Guangdong 518129 (CN)
(74) Representative: Epping - Hermann - Fischer
(86) International application number: PCT/CN2022/122931
(87) International publication number: WO 2023/051744

(57) **Abstract**

Embodiments of this application provide a communication method and a communication apparatus. The communication method includes: A terminal device receives a first parameter and a second parameter that are sent by a network device; the terminal device determines, based on the first parameter and the second parameter, an initial slot for transmission of a physical uplink shared channel PUSCH with a configured grant; and the terminal device performs transmission of the PUSCH with the configured grant based on the initial slot. The first parameter and the second parameter are any two of the following parameters: a quantity P of available slots in a configured grant periodicity; a quantity K of repetitions in a configured grant periodicity; and a quantity N of available slots in each repetition, where N is an integer greater than or equal to 2, and one transport block cyclic redundancy check code is carried in each repetition. This technical solution can reduce, to some extent, complexity of blind detection performed by the network device.

## Description

This application claims priority to Chinese Patent Application No. CN202111160969.1, filed with the China National Intellectual Property Administration on September 30, 2021, which is incorporated herein by reference in its entirety.

### TECHNICAL FIELD

Embodiments of this application relate to the communication field, and more specifically, to a communication method and a communication apparatus.

### BACKGROUND

Currently, in transmission of a physical uplink shared channel (physical uplink shared channel, PUSCH) with a configured grant, one PUSCH repetition is carried in one slot, and one transport block cyclic redundancy check code is carried in one slot. In a transmission periodicity, transmission of the PUSCH with the configured grant may start from a slot in which a repetition whose redundancy version (redundancy version, RV) is 0 is located. In this case, when receiving the PUSCH, a network device needs to determine a slot in which a repetition whose RV is 0 is located and from which a terminal device starts to send the PUSCH.

To enhance uplink coverage, it may be considered that one PUSCH repetition is carried in a plurality of slots, and one transport block cyclic redundancy check code is carried in a plurality of slots. In this new transmission mode, when resource utilization efficiency and blind detection complexity of a network side device are considered, how to determine an initial slot for PUSCH transmission and how to set an RV corresponding to each PUSCH repetition become problems that need to be resolved when the new PUSCH transmission mode is applied to a configured grant resource.

### SUMMARY

Embodiments of this application provide a communication method and a communication apparatus, to reduce complexity of blind detection by a network device.

According to a first aspect, a communication method is provided. A terminal device receives a first parameter and a second parameter that are sent by a network device. The terminal device determines, based on the first parameter and the second parameter, an initial slot for transmission of a physical uplink shared channel PUSCH with a configured grant. The terminal device performs transmission of the PUSCH with the configured grant based on the initial slot. The first parameter and the second parameter are any two of the following parameters: a quantity P of available slots in a configured grant periodicity; a quantity K of repetitions in a configured grant periodicity; and a quantity N of available slots in each repetition, where N is an integer greater than or equal to 2, and one transport block cyclic redundancy check code is carried in each repetition.

Based on this embodiment of this application, the network device sends the first parameter and the second parameter to the terminal device, and the terminal device can determine, based on the first parameter and the second parameter, the initial slot for transmission of the PUSCH with the configured grant, and perform transmission of the PUSCH with the configured grant based on the initial slot. This helps reduce complexity of blind detection by the network device.

With reference to the first aspect, in some implementations of the first aspect, the first parameter and the second parameter are carried in radio resource control RRC signaling; or the first parameter and the second parameter are carried in activation downlink control information DCI; or the first parameter is carried in RRC signaling, and the second parameter is carried in activation DCI; or the first parameter is carried in activation DCI, and the second parameter is carried in RRC signaling.

With reference to the first aspect, in some implementations of the first aspect, when the first parameter is the quantity P of available slots in the configured grant periodicity, if the second parameter is the quantity K of repetitions, the quantity P of available slots in the configured grant periodicity is an integer multiple of the quantity K of repetitions; or
if the second parameter is the quantity N of available slots in each repetition, the quantity P of available slots in the configured grant periodicity is an integer multiple of the quantity N of available slots in each repetition.

Based on this embodiment of this application, the quantity P of available slots in the configured grant periodicity can be the integer multiple of the quantity K of repetitions or the quantity N of available slots. This can reduce complexity of determining the initial slot by the terminal device. With reference to the first aspect, in some implementations of the first aspect, when the first parameter and the second parameter are the quantity K of repetitions and the quantity N of available slots in each repetition, the quantity of available slots in the configured grant periodicity is K*N.

With reference to the first aspect, in some implementations of the first aspect, the initial slot is an available slot that is in a configured grant periodicity and that is at a distance of M*N1 available slots from a reference available slot, where M is an integer, when the first parameter or the second parameter is the quantity N of available slots in each repetition, N1=N, and when one of the first parameter and the second parameter is the quantity P of available slots in the configured grant periodicity, and the other is the quantity K of repetitions in the configured grant periodicity, N1 =floor (P/K) or N1=ceiling (P/K); or the initial slot is an available slot that is in a configured grant periodicity and that is at a distance of M*N1-1 available slots from a reference available slot, where M is an integer greater than or equal to 1, when the first parameter or the second parameter is the quantity N of available slots in each repetition, N1=N, and when one of the first parameter and the second parameter is the quantity P of available slots in the configured grant periodicity, and the other is the quantity K of repetitions in the configured grant periodicity, N1 =floor (P/K) or N1=ceiling (P/K). Based on this embodiment of this application, a location of the initial slot can be determined. This can reduce complexity of performing blind detection by the network device. With reference to the first aspect, in some implementations of the first aspect, when the first parameter and the second parameter are the quantity K of repetitions in the configured grant periodicity and the quantity N of available slots in each repetition, or the first parameter is the quantity P of available slots in the configured grant periodicity, and the first parameter is an integer multiple of the second parameter,
the reference available slot is the first one of the available slots in the configured grant periodicity, and the initial slot is the available slot that is in the configured grant periodicity and that is at the distance of M*N1 available slots from the reference available slot.

Based on this embodiment of this application, the location of the initial slot can be determined. This can reduce complexity of performing blind detection by the network device.

With reference to the first aspect, in some implementations of the first aspect, when the first parameter is the quantity P of available slots in the configured grant periodicity, and the first parameter is not an integer multiple of the second parameter,
the reference available slot is the first one of the available slots in the configured grant periodicity, the initial slot is the available slot that is in the configured grant periodicity and that is at the distance of M*N1 available slots from the reference available slot, and M is an integer; or the reference available slot is the last one of the available slots in the configured grant periodicity, the initial slot is the available slot that is in the configured grant periodicity and that is at the distance of M*N1-1 available slots from the reference available slot, and M is an integer greater than or equal to 1.

Based on this embodiment of this application, the location of the initial slot can be determined. This can reduce complexity of performing blind detection by the network device.

With reference to the first aspect, in some implementations of the first aspect, the reference available slot is preset, or the reference available slot is received by the terminal device from the network device.

It should be understood that, in this embodiment of this application, the reference available slot is preset, and it may be understood that the reference available slot is specified in a protocol.

With reference to the first aspect, in some implementations of the first aspect, that the terminal device determines, based on the first parameter and the second parameter, an initial slot for transmission of a physical uplink shared channel PUSCH with a configured grant includes:
The terminal device determines, based on a redundancy version RV sequence, the first parameter, and the second parameter, the initial slot for transmission of the physical uplink shared channel PUSCH with the configured grant, where the redundancy version RV sequence is received by the terminal device from the network device.

Based on this embodiment of this application, the terminal device can determine the initial slot based on the first parameter and the second parameter, and can determine, based on the RV sequence, an RV used in the initial slot.

With reference to the first aspect, in some implementations of the first aspect, M=A1*N2, A1 is an integer greater than or equal to 0, and N2 is a minimum periodicity of the RV.

With reference to the first aspect, in some implementations of the first aspect, one RV is used in one repetition, RVs in the RV sequence are cyclically used in all repetitions for the transmission of the PUSCH with the configured grant.

With reference to the first aspect, in some implementations of the first aspect, an RV corresponding to a repetition carried in the initial slot is 0.

Based on this embodiment of this application, RV0 basically includes all system bits. This can improve a possibility of successful decoding in advance.

With reference to the first aspect, in some implementations of the first aspect, when the first parameter or the second parameter is the quantity K of repetitions in the configured grant periodicity, M is greater than or equal to 0 and is less than or equal to K-1, and M is an integer; or when the first parameter and the second parameter are the quantity P of available slots in the configured grant periodicity and the quantity N of available slots in each repetition, M is greater than or equal to 0 and is less than or equal to floor (P/N)-1, and M is an integer.

With reference to the first aspect, in some implementations of the first aspect, the performing transmission of the PUSCH with the configured grant based on the initial slot includes: encoding, from the repetition carried in the initial slot, the PUSCH with the configured grant based on an RV corresponding to each repetition of the transmission of the PUSCH with the configured grant; and performing transmission of the PUSCH with the configured grant based on a result of the encoding. With reference to the first aspect, in some implementations of the first aspect, an RV corresponding to a repetition carried in the initial slot is 0.

With reference to the first aspect, in some implementations of the first aspect, an RV corresponding to a repetition carried in the initial slot is a T^{th} RV in an RV sequence, T=floor (S/N)+1, and S is a sequence number of an initial slot in available slots in a configured grant periodicity.

In this technical solution, the RV used in an initial slot can be determined.

With reference to the first aspect, in some implementations of the first aspect, when the RV corresponding to the repetition carried in the initial slot is not 0, an RV used in at least one of all repetitions for the transmission of the PUSCH with the configured grant is 0.

Based on this embodiment of this application, RV0 basically includes all system bits, and other RVs may include only some system bits. If only the other RVs are sent, decoding may fail. This technical solution can improve a possibility of decoding in advance.

With reference to the first aspect, in some implementations of the first aspect, when the first parameter is the quantity P of available slots in the configured grant periodicity, the second parameter is the quantity N of available slots in each repetition, the first parameter is not the integer multiple of the second parameter, and the reference available slot is the first one of the available slots in the configured grant periodicity, the PUSCH is not transmitted in last P-floor (P/N)*N available slots; or the method further includes: encoding the PUSCH with the configured grant based on a first RV sequence and the quantity N of available slots, where the first RV is an RV corresponding to a repetition carried in last P-floor (P/N)*N available slots; and transmitting a result of the encoding from front to back in the last P-floor (P/N)*N available slots.

In this technical solution, when the PUSCH is not transmitted in the last available slot corresponding to less than one repetition, a process of the transmission of the PUSCH with the configured grant periodicity is simple. When the PUSCH is transmitted in the last available slot corresponding to less than one repetition, resource utilization is improved.

With reference to the first aspect, in some implementations of the first aspect, when the first parameter is the quantity P of available slots in the configured grant periodicity, the second parameter is the quantity K of repetitions in the configured grant periodicity, the first parameter is not the integer multiple of the second parameter, and the reference available slot is the first one of the available slots in the configured grant periodicity, the PUSCH is not transmitted in last P-floor (P/K)*K available slots; or the method further includes: encoding the PUSCH with the configured grant based on a first RV sequence and the quantity K of repetitions; and transmitting the PUSCH in the available slot corresponding to less than one repetition based on a result of the encoding.

In this technical solution, when the PUSCH is not transmitted in the last available slot corresponding to less than one repetition, a process of the transmission of the PUSCH with the configured grant periodicity is simple. When the PUSCH is transmitted in the last available slot corresponding to less than one repetition, resource utilization is improved.

According to a second aspect, a communication apparatus is provided, including:
a transceiver unit, configured to receive a first parameter and a second parameter that are sent by a network device; and
a processing unit, configured to determine, based on the first parameter and the second parameter, an initial slot for transmission of a physical uplink shared channel PUSCH with a configured grant, where
the processing unit is further configured to perform transmission of the PUSCH with the configured grant based on the initial slot.

With reference to the second aspect, in some implementations of the second aspect, the first parameter and the second parameter are carried in radio resource control RRC signaling; or the first parameter and the second parameter are carried in activation downlink control information DCI; or the first parameter is carried in RRC signaling, and the second parameter is carried in activation DCI; or the first parameter is carried in activation DCI, and the second parameter is carried in RRC signaling.

With reference to the second aspect, in some implementations of the second aspect, when the first parameter is a quantity P of available slots in a configured grant periodicity, if the second parameter is a quantity K of repetitions, the quantity P of available slots in the configured grant periodicity is an integer multiple of the quantity K of repetitions; or
if the second parameter is a quantity N of available slots in each repetition, a quantity P of available slots in a configured grant periodicity is an integer multiple of the quantity N of available slots in each repetition.

With reference to the second aspect, in some implementations of the second aspect, when the first parameter and the second parameter are a quantity K of repetitions and a quantity N of available slots in each repetition, a quantity of available slots in a configured grant periodicity is K*N.

With reference to the second aspect, in some implementations of the second aspect, the initial slot is an available slot that is in a configured grant periodicity and that is at a distance of M*N1 available slots from a reference available slot, where M is an integer, when the first parameter or the second parameter is a quantity N of available slots in each repetition, N1=N, and when one of the first parameter and the second parameter is a quantity P of available slots in a configured grant periodicity, and the other is a quantity K of repetitions in a configured grant periodicity, N1=floor (P/K) or N1=ceiling (P/K); or the initial slot is an available slot that is in a configured grant periodicity and that is at a distance of M*N1-1 available slots from a reference available slot, where M is an integer greater than or equal to 1, when the first parameter or the second parameter is a quantity N of available slots in each repetition, N1=N, and when one of the first parameter and the second parameter is a quantity P of available slots in a configured grant periodicity, and the other is a quantity K of repetitions in a configured grant periodicity, N1=floor (P/K) or N1=ceiling (P/K).

With reference to the second aspect, in some implementations of the second aspect, when the first parameter and the second parameter are the quantity K of repetitions in the configured grant periodicity and the quantity N of available slots in each repetition, or the first parameter is the quantity P of available slots in the configured grant periodicity, and the first parameter is an integer multiple of the second parameter,
the reference available slot is the first one of the available slots in the configured grant periodicity, and the initial slot is the available slot that is in the configured grant periodicity and that is at the distance of M*N1 available slots from the reference available slot.

With reference to the second aspect, in some implementations of the second aspect, when the first parameter is the quantity P of available slots in the configured grant periodicity, and the first parameter is not an integer multiple of the second parameter,
the reference available slot is the first one of the available slots in the configured grant periodicity, the initial slot is the available slot that is in the configured grant periodicity and that is at the distance of M*N1 available slots from the reference available slot, and M is an integer; or the reference available slot is the last one of the available slots in the configured grant periodicity, the initial slot is the available slot that is in the configured grant periodicity and that is at the distance of M*N1-1 available slots from the reference available slot, and M is an integer greater than or equal to 1.

With reference to the second aspect, in some implementations of the second aspect, the reference available slot is preset, or the reference available slot is received by the terminal device from the network device.

With reference to the second aspect, in some implementations of the second aspect, the processing unit is specifically configured to determine, based on a redundancy version RV sequence, the first parameter, and the second parameter, the initial slot for transmission of the physical uplink shared channel PUSCH with the configured grant, where the redundancy version RV sequence is received by a terminal device from the network device.

With reference to the second aspect, in some implementations of the second aspect, M=A1*N2, A1 is an integer greater than or equal to 0, and N2 is a minimum periodicity of the RV.

With reference to the second aspect, in some implementations of the second aspect, one RV is used in one repetition, RVs in the RV sequence are cyclically used in all repetitions for the transmission of the PUSCH with the configured grant.

With reference to the second aspect, in some implementations of the second aspect, an RV corresponding to a repetition carried in the initial slot is 0.

With reference to the second aspect, in some implementations of the second aspect, when the first parameter or the second parameter is the quantity K of repetitions in the configured grant periodicity, M is greater than or equal to 0 and is less than or equal to K-1, and M is an integer; or when the first parameter and the second parameter are the quantity P of available slots in the configured grant periodicity and the quantity N of available slots in each repetition, M is greater than or equal to 0 and is less than or equal to floor (P/N)-1, and M is an integer.

With reference to the second aspect, in some implementations of the second aspect, the processing unit is specifically configured to: encode, from repetition carried in the initial slot, the PUSCH with the configured grant based on an RV corresponding to each repetition of the transmission of the PUSCH with the configured grant, and perform transmission of the PUSCH with the configured grant based on a result of the encoding.

With reference to the second aspect, in some implementations of the second aspect, an RV corresponding to a repetition carried in the initial slot is 0.

With reference to the second aspect, in some implementations of the second aspect, an RV corresponding to a repetition carried in the initial slot is a T^{th} RV in an RV sequence, T=floor (S/N)+1, and S is a sequence number of an initial slot in available slots in a configured grant periodicity.

With reference to the second aspect, in some implementations of the second aspect, when the RV corresponding to the repetition carried in the initial slot is not 0, an RV used in at least one of all repetitions for the transmission of the PUSCH with the configured grant is 0.

With reference to the second aspect, in some implementations of the second aspect, when the first parameter is the quantity P of available slots in the configured grant periodicity, the second parameter is the quantity N of available slots in each repetition, the first parameter is not the integer multiple of the second parameter, and the reference available slot is the first one of the available slots in the configured grant periodicity, the PUSCH is not transmitted in last P-floor (P/N)*N available slots; or the processing unit is further configured to:
encode the PUSCH with the configured grant based on a first RV sequence and the quantity N of available slots, where the first RV is an RV corresponding to a repetition carried in the last P-floor (P/N)*N available slots; and
transmit a result of the encoding from front to back in the last P-floor (P/N)*N available slots.

With reference to the second aspect, in some implementations of the second aspect, when the first parameter is the quantity P of available slots in the configured grant periodicity, the second parameter is the quantity K of repetitions in the configured grant periodicity, the first parameter is not the integer multiple of the second parameter, and the reference available slot is the first one of the available slots in the configured grant periodicity, the PUSCH is not transmitted in last P-floor (P/K)*K available slots; or the processing unit is further configured to:
encode the PUSCH with the configured grant based on a first RV sequence and the quantity N of available slots, where the first RV is an RV corresponding to a repetition carried in the last P-floor (P/K)*K available slots; and
transmit a result of the encoding from front to back in the last P-floor (P/K)*K available slots.

According to a third aspect, a communication apparatus is provided, including at least one processor. The at least one processor is coupled to at least one memory, and the at least one processor is configured to execute a computer program or instructions stored in the at least one memory, so that the communication method according to any one of the first aspect and the possible implementations of the first aspect is performed.

According to a fourth aspect, a chip is provided. The chip includes a processor and an interface circuit, the processor and the interface circuit are coupled to each other, the interface circuit is configured to communicate with another device, and a signal is processed by the processor, so that the communication method according to any one of the first aspect and the possible implementations of the first aspect is performed.

According to a fifth aspect, a computer-readable storage medium is provided. The computer-readable storage medium stores computer instructions, and when the computer instructions are run on a computer, the communication method according to any one of the first aspect and the possible implementations of the first aspect is performed.

According to a sixth aspect, a computer program product is provided, including computer program code. When the computer program code is run on a computer, the communication method according to any one of the first aspect and the possible implementations of the first aspect is performed.

### BRIEF DESCRIPTION OF DRAWINGS

FIG. 1 is a schematic diagram of an architecture of a communication system according to an embodiment of this application;
FIG. 2 is a schematic diagram of a repetition type according to an embodiment of this application;
FIG. 3 is a schematic diagram of another repetition type according to an embodiment of this application;
FIG. 4 is a schematic diagram of a transport block over multi-slot according to an embodiment of this application;
FIG. 5 is a schematic diagram of a time domain resource configuration according to an embodiment of this application;
FIG. 6 is a schematic diagram of a redundancy version sequence according to an embodiment of this application;
FIG. 7 is a schematic diagram of another redundancy version sequence according to an embodiment of this application;
FIG. 8 is a schematic diagram of still another redundancy version sequence according to an embodiment of this application;
FIG. 9 is a schematic interaction diagram of a communication method according to an embodiment of this application;
FIG. 10 is a schematic diagram of a possibility for PUSCH transmission according to an embodiment of this application;
FIG. 11 is a schematic diagram of another possibility for PUSCH transmission according to an embodiment of this application;
FIG. 12 is a schematic diagram of still another possibility for PUSCH transmission according to an embodiment of this application;
FIG. 13 is a schematic diagram of yet another possibility for PUSCH transmission according to an embodiment of this application;
FIG. 14 is a schematic diagram of still yet another possibility for PUSCH transmission according to an embodiment of this application; and
FIG. 15 is a schematic block diagram of a communication apparatus according to an embodiment of this application.

### DESCRIPTION OF EMBODIMENTS

The following describes technical solutions of embodiments in this application with reference to accompanying drawings.

The technical solutions of embodiments of this application are applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

The terminal device in embodiments of this application may be user equipment (user equipment, UE), an access terminal, a subscriber unit, a subscriber station, a mobile station, a mobile station (mobile station, MS), a remote station, a remote terminal, a mobile device, a user terminal, a terminal, or a mobile terminal (mobile terminal, MT), a wireless communication device, a user agent or a user apparatus, or the like. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. The terminal device may be a mobile phone (mobile phone), a tablet computer (Pad), a computer with a wireless receiving and sending function, virtual reality (virtual reality, VR) terminal device, augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), and a wireless terminal in a smart city (smart city), a wireless terminal in a smart home (smart home), or the like. This is not limited in embodiments of this application.

A network device in embodiments of this application may be a device configured to communicate with the terminal device. The network device may be a base transceiver station (base transceiver station, BTS) in the global system for mobile communications (global system for mobile communications, GSM) system or the code division multiple access (code division multiple access, CDMA) system, may be a NodeB (NodeB, NB) in the wideband code division multiple access (wideband code division multiple access, WCDMA) system, may be an evolved NodeB (evolved NodeB, eNB or eNodeB) in the LTE system, or may be a radio controller in a cloud radio access network (cloud radio access network, CRAN) scenario. Alternatively, the network device may be a relay station, an access point, an access node in a Wi-Fi system, a vehicle-mounted device, a wearable device, a network device in the 5G and 6G network, a network device in the future evolved PLMN, or the like. This is not limited in embodiments of this application.

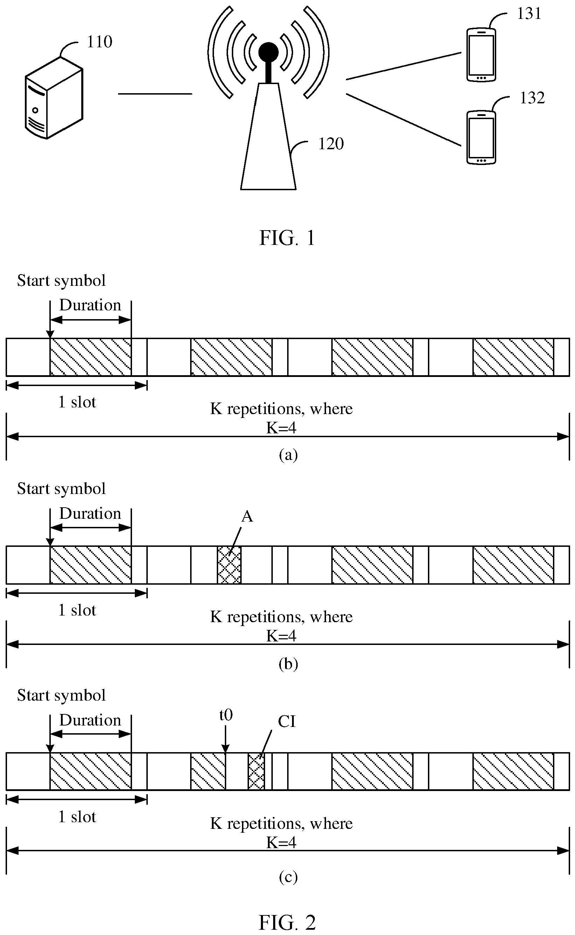

FIG. 1 is a schematic diagram of an architecture of a communication system according to an embodiment of this application.

As shown in FIG. 1, the communication system may include a core network device 110, a radio access network device 120, and at least one terminal device 131 or 132. The terminal device 131 or 132 is connected to the radio access network device 120 in a wireless manner, and the radio access network device 120 is connected to the core network device 110 in a wireless or wired manner. The core network device 110 and the radio access network device 120 may be independent and different physical devices, or functions of the core network device and logical functions of the radio access network device are integrated into a same physical device, or a part of functions of the core network device and a part of functions of the radio access network device are integrated into one physical device. The terminal device 131 or 132 may be located at a fixed location, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device and the terminal device may be deployed on land, including an indoor or outdoor device, a handheld device, or a vehicle-mounted device; or may be deployed on water; or may be deployed on an airplane, a balloon, and a satellite in the air. Application scenarios of the radio access network device and the terminal device are not limited in embodiments of this application.

This embodiment of this application is applicable to downlink signal transmission, uplink signal transmission, or device-to-device (device to device, D2D) signal transmission. For the downlink signal transmission, a sending device is the radio access network device, and correspondingly a receiving device is the terminal device. For the uplink signal transmission, a sending device is the terminal device, and correspondingly a receiving device is the radio access network device. For the D2D signal transmission, a sending device is the terminal device, and correspondingly a receiving device is also the terminal device. A signal transmission direction is not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. A spectrum below 6G, a spectrum above 6G, or both of a spectrum below 6G and a spectrum above 6G may be used for communication between the radio access network device and the terminal device, and between terminal devices. Spectrum resources used by the radio access network device and the terminal device are not limited in embodiments of this application.

In NR, there are usually the following several scheduling manners of a physical uplink shared channel (physical uplink shared channel, PUSCH).

Manner 1:
The PUSCH is dynamically scheduled by an uplink grant in one piece of downlink control information (downlink control information, DCI), where the DCI is physical layer information. In this case, the terminal device performs PUSCH transmission once after receiving uplink scheduling.

Manner 2:
Configured grant (configured grant, CG) type 1: semi-persistently configured by using a higher layer information element configuredGrantConfig including rrc-ConfiguredUplinkGrant, without receiving an uplink grant in DCI.

In this case, some semi-persistent resources are configured at a higher layer. If the terminal device needs to send uplink data, the terminal device may perform PUSCH transmission by using these resources; or if the terminal device does not need to send uplink data, the terminal device does not perform PUSCH transmission.

Manner 3:
Configured grant type 2: First receive a higher layer information element configuredGrantConfig that does not include rrc-ConfiguredUplinkGrant, and then perform semi-persistent scheduling by an uplink grant in the valid activation DCI.

In this case, some semi-persistent resources are configured at a higher layer, and then deactivated by using physical layer signaling. During activation, if the terminal device needs to send uplink data, the terminal device may use these resources to perform PUSCH transmission. If the terminal device is not activated, these resources cannot be used.

One PUSCH may include a plurality of repetitions (repetition), and the repetitions transmit a same transport block (transport block, TB). The redundancy versions may be the same or different. One transport block cyclic redundancy check (transport block cyclic redundancy check, TB CRC) code is carried in one repetition. In addition, a unit of rate matching is also a repetition. The technical solutions of this application are specific to PUSCH transmission of a transport block over multi-slot.

FIG. 2 is a schematic diagram of a repetition type according to an embodiment of this application. As shown in (a) in FIG. 2, if K repetitions (K=4) are set, K transmission occasions correspond to K consecutive slots (slots). One transmission occasion in each slot may be used to transmit a repetition of one PUSCH, and start symbols and duration of transmission occasions (a pattern padding part in FIG. 2) in the slots are the same.

In a time division multiplexing (time division duplexing, TDD) mode, if any symbol in a resource corresponding to a PUSCH repetition is a downlink symbol, or a time-frequency resource of the PUSCH overlaps a cancelled resource indicated by a cancellation indication (cancellation indication, CI), or overlaps a high-priority uplink channel/signal transmission, sending the PUSCH repetition is canceled. As shown in (b) in FIG. 2, in a second repetition, a resource A corresponding to the repetition is a downlink symbol, and sending a second PUSCH repetition is canceled. However, in some cases, there may be a case in which sending may not be canceled in time. As shown in (c) in FIG. 2, when the second PUSCH repetition has started to be sent, for example, the CI is parsed out at the moment t0, and it is found that the resource B overlaps. In this case, if the second PUSCH repetition has been partially transmitted, only some PUSCH repetitions may be canceled.

It can be learned from the foregoing content that, in the repetition type, K repetitions for performing one PUSCH transmission once are nominal repetitions. In other words, one PUSCH transmission performed once corresponds to K slots, regardless of whether each of the K slots can be used to send a PUSCH repetition.

Then, in another repetition type, a concept of an available slot (available slot) is introduced. For the scheduling manner of the PUSCH in the foregoing manner 1, the K available slots may be determined based on radio resource control (radio resource control, RRC) configuration and scheduling DCI. For the PUSCH scheduling manner in the foregoing manner 2, the K available slots may be determined based on an RRC configuration. For the PUSCH scheduling manner in the foregoing manner 3, the K available slots may be determined based on RRC configuration and activation DCI.

As mentioned above, some reasons may result in cancellation of a repetition for performing PUSCH transmission once. One type is determined based on RRC configuration, and the second type is determined based on a dynamic indication, that is, caused by a physical layer indication, for example, the CI. However, only RRC signaling may be considered for determining the available slot, and another physical layer indication other than the DCI scheduled by using the PUSCH is not considered.

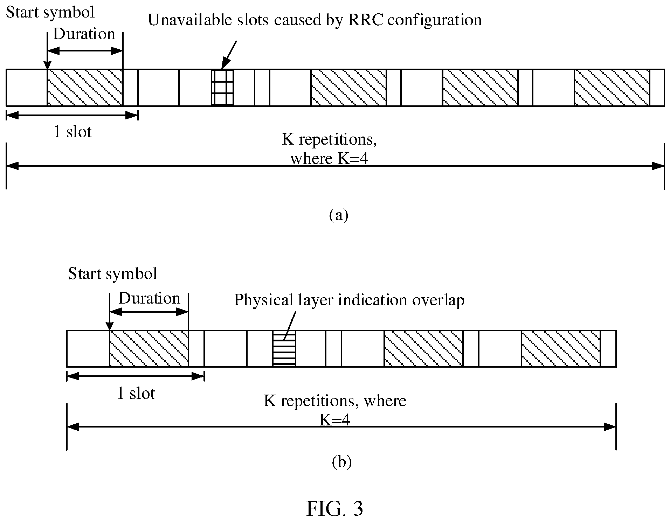

FIG. 3 is a schematic diagram of another repetition type according to an embodiment of this application. As shown in (a) in FIG. 3, in a slot corresponding to a second repetition, if a high-priority uplink channel/signal transmission configured by using RRC overlaps with a PUSCH resource, the slot is not an available slot.

As shown in (b) in FIG. 3, in a slot corresponding to a second repetition, if a high-priority uplink channel/signal transmission indicated by using a physical layer overlaps with a PUSCH resource, the slot is still an available slot.

In PUSCH transmission of a transport block over multi-slot, if K repetitions are set, each repetition corresponds to N consecutive slots, K transmission occasions correspond to N*K consecutive slots in total, and a start symbol and duration that are of an available resource in each slot are the same. One TB CRC is carried in one repetition, that is, one TB CRC is carried in N slots. This can reduce signaling overheads of the TB CRC.

In addition, rate matching may also be performed in a unit of N slots. It should be noted that the slots herein may be all slots, or may be available slots.

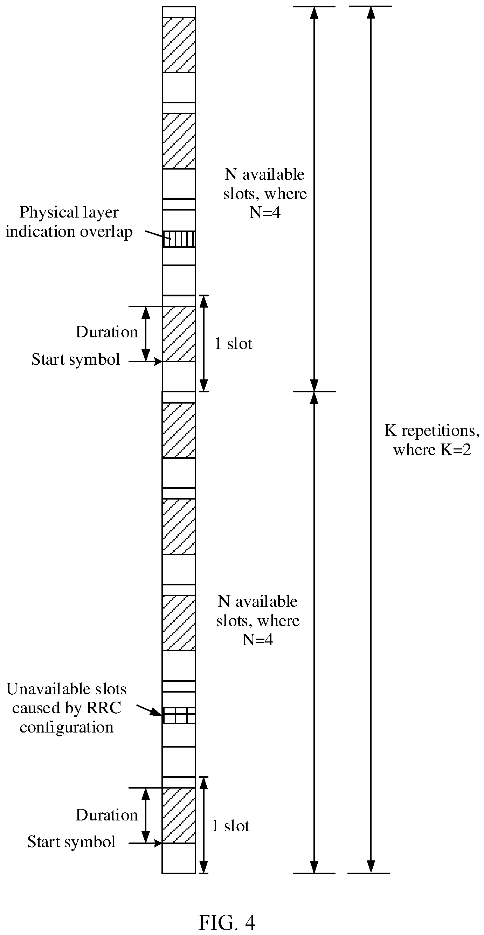

FIG. 4 is a schematic diagram of a transport block over multi-slot according to an embodiment of this application. As shown in FIG. 4, K repetitions (K=2) are set, each repetition may be understood as a transport block over multi-slot, and each repetition includes four available slots.

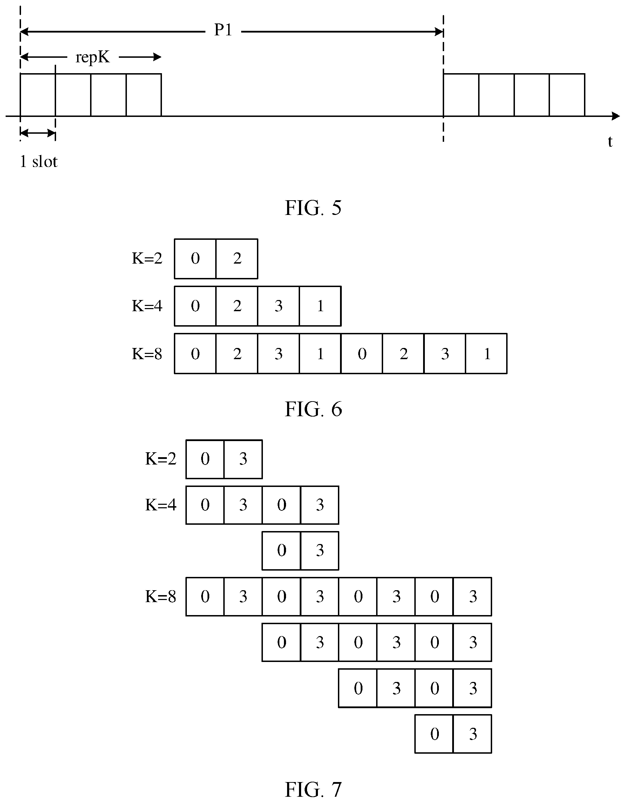

FIG. 5 is a schematic diagram of a time domain resource configuration according to an embodiment of this application. As shown in FIG. 5, in transmission of a PUSCH with a configured grant, a higher layer configuration resource may include the following parameters.

Periodicity (periodicity): indicates a spacing between two adjacent groups of transmission occasions. A minimum value of the periodicity is two symbols, and a maximum value of the periodicity may be 5120 slots.

Quantity of repetitions repK is a quantity of transmission occasions included in each group of transmission occasions, namely, a quantity of repetitions, or may be a quantity of slots or a quantity of available slots.

It should be understood that, the repK may be referred to as K for short, a value of K may include {1, 2, 4, 8}, a value that may be supported in the future may include {1, 2, 3, 4, 7, 8, 12, 16, 20, 24, 28, 32}, and K may alternatively be another value. This is not limited in this embodiment of this application.

A higher layer parameter repK-RV indicates a redundancy version (redundancy version, RV) sequence used in transmission of K repetitions. For an n^{th} transmission occasion in transmission of K repetitions, a (mod(n-1, 4)+1)^{th} value in the RV sequence is used, where n=1, 2, ..., K.

The repK-RV has four cases: not configured, configured as {0, 2, 3, 1}, configured as {0, 3, 0, 3}, and configured as {0, 0, 0, 0}.

If the higher layer parameter startingFromRV0 is set to off, a transport block can be transmitted only from a first transmission occasion of the K repetitions. Otherwise, a transport block is transmitted as follows:
When K=1, the parameter repK-RV is not configured by using ConfiguredGrantConfig, and the transmitted RV version is set to 0.

The following separately describes transmission manners of transport blocks in the remaining several RV sequences with reference to FIG. 6 to FIG. 8.

If the RV sequence is configured as {0, 2, 3, 1}, initial transmission can be performed only on the first transmission occasion of the K repetitions. FIG. 6 is a schematic diagram of a redundancy version sequence according to an embodiment of this application.

When K=2, an RV used in the first repetition is 0, and an RV used in the second repetition is 3.

It should be understood that if each repetition includes N slots, RVs used in the N slots are the same.

When K=4, an RV used in the first repetition is 0, an RV used in the second repetition is 3, an RV used in the third repetition is 3, and an RV used in the fourth repetition is 1.

It should be understood that if each repetition includes N slots, RVs used in the N slots are the same.

When K=8, an RV used in the first repetition is 0, an RV used in the second repetition is 3, an RV used in the third repetition is 2, an RV used in the fourth repetition is 1, an RV used in the fifth repetition is 0, an RV used in the sixth repetition is 3, an RV used in the seventh repetition is 2, and an RV used in the eighth repetition is 1.

It should be understood that if each repetition includes N slots, RVs used in the N slots are the same.

It should be further understood that when K is another value, for example, K=16, the 16 repetitions may be cyclically used based on an RV sequence {0, 2, 3, 1}.

If the RV sequence is configured as {0, 3, 0, 3}, initial transmission may occur on any one transmission occasion that is of transmission occasions corresponding to K repetitions and that corresponds to RV=0. FIG. 7 is a schematic diagram of another redundancy version sequence according to an embodiment of this application.

When K=2, an RV used in the first repetition is 0, and an RV used in the second repetition is 3.

It should be understood that if each repetition includes N slots, RVs used in the N slots are the same.

When K=4, a transmission status of a repetition may include the following two cases:
In one manner, the initial transmission starts from the first repetition. In this case, an RV used in the first repetition is 0, an RV used in the second repetition is 3, an RV used in the third repetition is 0, and an RV used in the fourth repetition is 3.

In the other manner, the PUSCH is not transmitted in the first repetition and the second repetition, and the initial transmission starts from the third repetition. In this case, an RV used in the third repetition is 0, and an RV used in the fourth repetition is 3.

When K=8, a transmission status of a repetition may include the following four cases:
In a first manner, the initial transmission starts from the first repetition. In this case, an RV used in the first repetition is 0, an RV used in the second repetition is 3, an RV used in the third repetition is 0, an RV used in the fourth repetition is 3, an RV used in the fifth repetition is 0, an RV used in the sixth repetition is 3, an RV used in the seventh repetition is 0, and an RV used in the eighth repetition is 3.

In a second manner, the PUSCH is not transmitted in the first repetition and the second repetition, and the initial transmission starts from the third repetition. In this case, an RV used in the third repetition is 0, an RV used in the fourth repetition is 3, an RV used in the fifth repetition is 0, an RV used in the sixth repetition is 3, an RV used in the seventh repetition is 0, and an RV used in the eighth repetition is 3.

In a third manner, the PUSCH is not transmitted from the first repetition to the fourth repetition, and the initial transmission starts from the fifth repetition. In this case, an RV used in the fifth repetition is 0, an RV used in the sixth repetition is 3, an RV used in the seventh repetition is 0, and an RV used in the eighth repetition is 3.

In a fourth manner, the PUSCH is not transmitted from the first repetition to the sixth repetition. Initial transmission starts from the seventh repetition, an RV used in the seventh repetition is 0, and an RV used in the eighth repetition is 3.

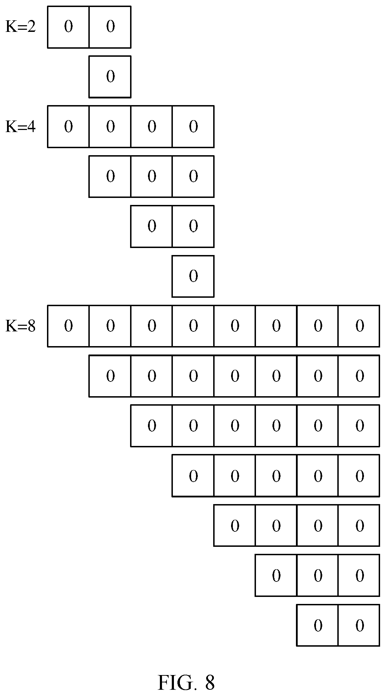

If the RV sequence is configured as {0, 0, 0, 0}, initial transmission may occur on any one of transmission occasions corresponding to the K repetitions. However, when K=8, the initial transmission cannot occur on the last transmission occasion. FIG. 8 is a schematic diagram of still another redundancy version sequence according to an embodiment of this application.

When K=2, a transmission status of a repetition may include the following two cases:
In one manner, the initial transmission starts from the first repetition. In this case, an RV used in the first repetition is 0, and an RV used in the second repetition is 0.

In the other manner, the PUSCH is not transmitted in the first repetition. In this case, an RV used in the second repetition is 0.

When K=4, a transmission status of a repetition may include the following four cases:
In a first manner, the initial transmission starts from the first repetition. In this case, RVs used from the first repetition to the fourth repetition are all 0.

In a second manner, the PUSCH is not transmitted in the first repetition, and the initial transmission starts from the second repetition. In this case, RVs used from the second repetition to the fourth repetition are all 0.

In a third manner, the PUSCH is not transmitted in the first repetition and the second repetition, and the initial transmission starts from the third repetition. In this case, RVs used in the third repetition and the fourth repetition are 0.

In a fourth manner, the PUSCH is not transmitted from the first repetition to the third repetition, and the initial transmission starts from the fourth repetition. In this case, an RV used in the fourth repetition is 0.

When K=8, a transmission status of a repetition may include the following seven cases:
In a first manner, the initial transmission starts from the first repetition. In this case, RVs used from the first repetition to the eighth repetition are all 0.

In a second manner, the PUSCH is not transmitted in the first repetition, and the initial transmission starts from the second repetition. In this case, RVs used from the second repetition to the eighth repetition are all 0.

In a third manner, the PUSCH is not transmitted in the first repetition and the second repetition, and the initial transmission starts from the third repetition. In this case, RVs used from the third repetition to the eighth repetition are all 0.

In a fourth manner, the PUSCH is not transmitted from the first repetition to the third repetition, and the initial transmission starts from the fourth repetition. In this case, RVs used from the fourth repetition to the eighth repetition are all 0.

In a fifth manner, the PUSCH is not transmitted from the first repetition to the fourth repetition, and the initial transmission starts from the fifth repetition. In this case, RVs used from the fifth repetition to the eighth repetition are all 0.

In a sixth manner, the PUSCH is not transmitted from the first repetition to the fifth repetition, and the initial transmission starts from the sixth repetition. In this case, RVs used from the sixth repetition to the eighth repetition are all 0.

In a seventh manner, the PUSCH is not transmitted from the first repetition to the sixth repetition, and the initial transmission starts from the seventh repetition. In this case, RVs used in the seventh repetition and the eighth repetition are all 0.

For any RV sequence, there are three conditions for stopping repetition transmission, and transmission needs to be stopped when any one of the conditions is met first:
(1) K repetitions have been transmitted;
(2) transmission is performed on the last transmission occasion of K repetitions in a periodicity (periodicity); and
(3) transmission is performed on a start symbol of another PUSCH in the same process scheduled by using DCI format0_0 or 0_1

As described above, on a transmission occasion, if a terminal device needs to send data, the terminal device may send the data on a configured resource; or if a terminal device does not need to send data, the terminal device may not send the data. Whether the terminal device has sent data or not, the network device needs to perform blind detection. The network device may configure parameters for different demodulation reference signals (demodulation reference signals, DMRSs) of different terminal devices. In this way, the network device may monitor different DMRSs of different terminal devices, and detect whether the terminal device sends data on this transmission occasion.

In addition, on a transmission occasion, transmission of the PUSCH with the configured grant may start from a repetition whose RV is 0. In this case, when receiving the PUSCH, the network device needs to determine the terminal device starts to send the PUSCH from a repetition whose RV is 0. This increases complexity of blind detection performed by the network device.

Further, when the network device determines, by using the DMRS, whether data is to be sent on a transmission occasion, there may be no PUSCH transmission on one transmission occasion, and a result of blind detection is that there is PUSCH transmission; or when there is PUSCH transmission on one transmission occasion, a result of blind detection is that there is no PUSCH transmission, and consequently, PUSCH receiving performance deteriorates.

To enhance uplink coverage, it may be considered that one PUSCH repetition is carried in a plurality of slots, and one transport block cyclic redundancy check code is carried in a plurality of slots. In this new transmission mode, when resource utilization efficiency and blind detection complexity of the network side device are considered, how to determine an initial slot for PUSCH transmission and how to set an RV corresponding to each PUSCH repetition become problems that need to be resolved when the new PUSCH transmission mode is applied to a configured grant resource.

In view of this, embodiments of this application provide a communication method, to reduce complexity of blind detection performed by a network device and improve PUSCH receiving performance.

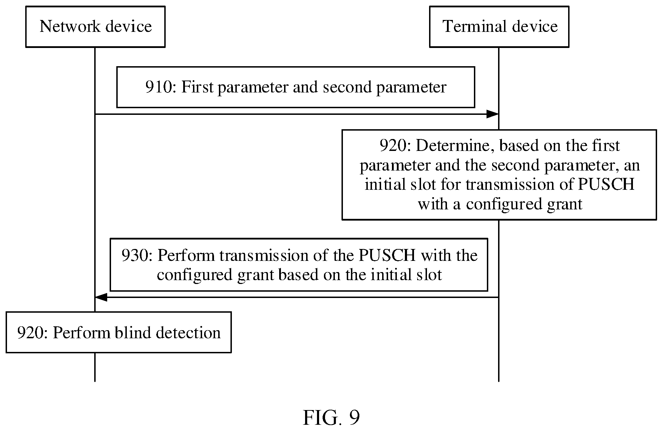

FIG. 9 is a schematic interaction diagram of a communication method according to an embodiment of this application. As shown in FIG. 9, the method may include step 910 to step 940.

910: A network device sends a first parameter and a second parameter to a terminal device, where the first parameter and the second parameter are any two of the following parameters: a quantity P of available slots in a configured grant periodicity; a quantity K of repetitions in a configured grant periodicity; and a quantity N of available slots in each repetition, where N is an integer greater than or equal to 2, and one transport block cyclic redundancy check TB CRC code is carried in each repetition.

It should be noted that an available slot in the specification may be replaced with a slot, in other words, whether the available slot is available is not distinguished.

It should be noted that, the quantity N of available slots in each repetition means that each repetition is transmitted in N available slots.

For example, the first parameter is the quantity P of available slots in the configured grant periodicity, and the second parameter is the quantity K of repetitions in the configured grant periodicity; or the first parameter is the quantity P of available slots in the configured grant periodicity, and the second parameter is the quantity N of available slots in each repetition; or the first parameter is the quantity P of available slots in the configured grant periodicity, and the second parameter is the quantity N of available slots in each repetition.

It should be understood that the first parameter and the second parameter may be carried in radio resource control RRC signaling; or the first parameter and the second parameter are carried in activation downlink control information DCI; or the first parameter is carried in RRC signaling, and the second parameter is carried in activation DCI; or the first parameter is carried in activation DCI, and the second parameter is carried in RRC signaling. This is not limited in this embodiment of this application. When the first parameter and the second parameter are respectively carried in the RRC signaling and the activation DCI, the network device may adjust parameters based on a real-time transmission status, so that scheduling flexibility of the network device can be improved, and further, signaling overheads of a physical layer can be reduced.

It should be noted that the activation downlink control information DCI herein is activation downlink control information for a configured grant Type 2 PUSCH transmission.

In some implementations, when the first parameter is the quantity P of available slots in the configured grant periodicity, if the second parameter is the quantity K of repetitions, the quantity P of available slots in the configured grant periodicity is an integer multiple of the quantity K of repetitions; or
if the second parameter is the quantity N of available slots in each repetition, the quantity P of available slots in the configured grant periodicity is an integer multiple of the quantity N of available slots in each repetition.

When the quantity P of available slots in the configured grant periodicity is an integer multiple of the quantity K of repetitions in the configured grant periodicity or the integer multiple of the quantity N of available slots included in each repetition, complexity of calculating an initial slot can be reduced.

In this case, it may be specified in a protocol that the quantity P of available slots in the configured grant periodicity is the integer multiple of the quantity K of repetitions in the configured grant periodicity or the integer multiple of the quantity N of available slots included in each repetition. When the quantity P of available slots in the configured grant periodicity is not the integer multiple of the quantity K of repetitions in the configured grant periodicity or the integer multiple of the quantity N of available slots included in each repetition, the terminal device may consider that the configuration is unavailable.

In some other implementations, when the first parameter and the second parameter are the quantity K of repetitions and the quantity N of available slots in each repetition, the quantity of available slots in the configured grant periodicity is K*N.

In this case, the quantity P of available slots in the configured grant periodicity may be obtained through calculation based on the first parameter and the second parameter, that is, P=K*N.

920: The terminal device determines, based on the first parameter and the second parameter, an initial slot for transmission of a PUSCH with a configured grant.

It should be understood that the initial slot is a slot in which the terminal device starts to transmit the PUSCH. The initial slot may be the first one of the available slots in the configured grant periodicity, or may be the last one of the available slots in a configured grant periodicity, or may be another slot of the available slots in a configured grant periodicity. This is not limited in this embodiment of this application.

In a possible implementation, the initial slot is an available slot that is in a configured grant periodicity and that is at a distance of M*N1 available slots from a reference available slot, where M is an integer, when the first parameter or the second parameter is the quantity N of available slots in each repetition, N1=N, and when one of the first parameter and the second parameter is the quantity P of available slots in the configured grant periodicity, and the other is the quantity K of repetitions in the configured grant periodicity, N1 =floor (P/K) or N1=ceiling (P/K); or the initial slot is an available slot that is in a configured grant periodicity and that is at a distance of M*N1 - 1 available slots from a reference available slot, where M is an integer greater than or equal to 1, when the first parameter or the second parameter is the quantity N of available slots in each repetition, N1=N, and when one of the first parameter and the second parameter is the quantity P of available slots in the configured grant periodicity, and the other is the quantity K of repetitions in the configured grant periodicity, N1=floor (P/K) or N1=ceiling (P/K).

It should be noted that, that the initial slot is the available slot that is at a distance of M*N1 available slots from the reference available slot means that a difference between sequence numbers of the available slots is M*N1, that the sequence number of the initial slot may be M*N1 greater than the sequence number of the reference available slot, or that the sequence number of the reference available slot may be M*N1 greater than the sequence number of the initial slot.

That the terminal device determines, based on the first parameter and the second parameter, an initial slot for transmission of a physical uplink shared channel PUSCH with a configured grant includes:
The terminal device determines, based on a redundancy version RV sequence, the first parameter, and the second parameter, the initial slot for transmission of the physical uplink shared channel PUSCH with the configured grant, where the redundancy version RV sequence is received by the terminal device from the network device.

It should be understood that the terminal device may determine the initial slot based on the first parameter and the second parameter, and determine, based on the RV sequence, an RV corresponding to a repetition carried in the initial slot.

It should be understood that the RV sequence may be received by the terminal device from the network device. The RV sequence may be the foregoing {0, 0, 0, 0}, {0, 2, 3, 1}, {0, 3, 0, 3}, or the like.

930: The terminal device performs transmission of the PUSCH with the configured grant based on the initial slot.

The terminal device performs, from the initial slot, transmission of the PUSCH with the configured grant based on the initial slot.

Specifically, the terminal device encodes, from the repetition carried in the initial slot, the PUSCH with the configured grant based on an RV corresponding to each repetition of the transmission of the PUSCH with the configured grant, and performs transmission of the PUSCH with the configured grant based on a result of the encoding.

Optionally, an RV corresponding to a repetition carried in the initial slot is 0.

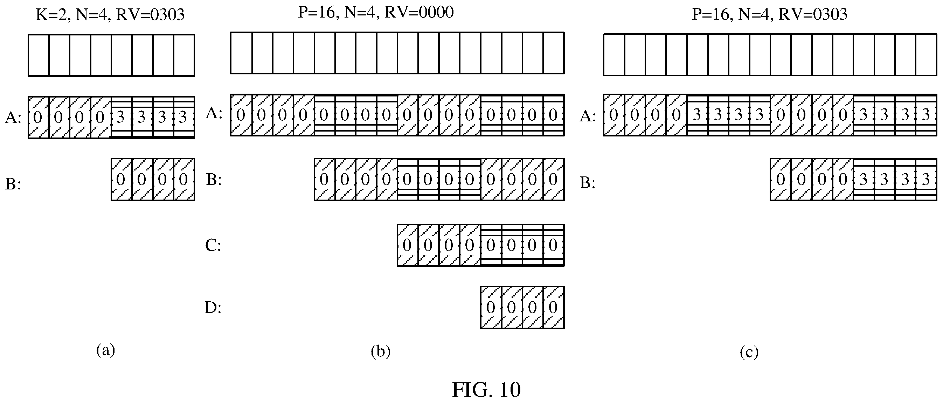

For example, refer to (a) in FIG. 10. FIG. 10 is a schematic diagram of a possibility for PUSCH transmission according to this embodiment of this application. A quantity K of repetitions in a configured grant periodicity is 2, and a quantity N of available slots included in each repetition is 4. In this case, an available slot P in a configured grant periodicity is equal to K*N, and is equal to 8, and an RV sequence is {0, 3, 0, 3}.

In a possibility A, if the initial slot is the first one of the available slots in the configured grant periodicity, an RV used for encoding in the first repetition, that is, the first slot to the fourth slot, is 0, and an RV used for encoding in the second repetition, that is, the fifth slot to the eighth slot, is 3. In this case, the terminal device may perform transmission of the PUSCH with the configured grant in the encoded repetition.

In a possibility B, the initial slot is the fifth one of the available slots in the configured grant periodicity, that is, the PUSCH is not transmitted in the first repetition, and RVs used for encoding in the fifth slot to the eighth slot are 0. In this case, the terminal device may perform transmission of the PUSCH with the configured grant in the second encoded repetition.

Optionally, one RV is used in one repetition, and RVs in the RV sequence are cyclically used in all the repetitions for the transmission of the PUSCH with the configured grant.

For example, refer to (c) in FIG. 10. A quantity P of available slots in a configured grant periodicity is 16, and a quantity N of available slots included in each repetition is 4. It can be learned that a quantity K of repetitions in the configured grant periodicity is 4, and an RV sequence is {0, 3, 0, 3}.

In a possibility A, the initial slot is the first one of the available slots in the configured grant periodicity, and RVs used in the first available slot to the fourth available slot included in the first repetition are the same, that is, the RVs are 0. An RV used in the second repetition is 3, an RV used in the third repetition is 0, and an RV used in the fourth repetition is 3. It should be understood that, if the configured grant periodicity has more repetitions, RVs are cyclically used in the remaining repetitions based on the RV sequence.

940: The network device performs blind detection.

It should be understood that, when performing blind detection, the network device may determine, by using a DMRS starting from a plurality of possible initial slots, whether data is to be sent on one piece of configured grant scheduling. When it is determined that data is to be sent in a possible initial slot, the repetition carried in the initial slot may be decoded based on the RV sequence. For example, when data is sent in an initial slot, and the network device determines that an RV corresponding to a repetition carried in the initial slot is 0, RV0 may be directly used for decoding. After receiving the PUSCH with the configured grant, the network device may determine the initial slot for transmission of the PUSCH. This can reduce complexity of blind detection by the network device.

Based on this embodiment of this application, the network device sends the first parameter and the second parameter to the terminal device, and the terminal device can determine, based on the first parameter and the second parameter, the initial slot for transmission of the PUSCH with the configured grant, and perform transmission of the PUSCH with the configured grant based on the initial slot. This helps reduce complexity of blind detection by the network device.

Optionally, when the first parameter and the second parameter are the quantity K of repetitions in the configured grant periodicity and the quantity N of available slots in each repetition, or the first parameter is the quantity P of available slots in the configured grant periodicity, and the first parameter is an integer multiple of the second parameter,
the reference available slot is the first one of the available slots in the configured grant periodicity, and the initial slot is the available slot that is in the configured grant periodicity and that is at the distance of M*N1 available slots from the reference available slot.

In an example, refer to (a) in FIG. 10. The first parameter may be the quantity K of repetitions in the configured grant periodicity, where K=2; and the second parameter may be the quantity N of available slots in each repetition, where N=4.

That M=0 corresponds to the possibility A, the reference available slot is the first one of the available slots in the configured grant periodicity, and the initial slot is an available slot that is at a distance of 0*4 available slots from the reference available slot, that is, the initial slot is the reference available slot, namely, the first one of the available slots in the configured grant periodicity.

That M=1 corresponds to the possibility B, the reference available slot is the first one of the available slots in the configured grant periodicity, and the initial slot is an available slot that is at a distance of 1 *4 available slots from the reference available slot, that is, the initial slot is the fifth available slot.

In another example, refer to (b) in FIG. 10. The first parameter may be the quantity P of available slots in the configured grant periodicity, where P=16; and the second parameter may be the quantity N of available slots included in each repetition, where N=4. In this case, the quantity P of available slots in the configured grant periodicity is an integer multiple of the quantity N of available slots in each repetition.

ThatM=0 corresponds to a possibility A, the reference available slot is the first one of the available slots in the configured grant periodicity, and the initial slot is an available slot that is at a distance of 0*4 available slots from the reference available slot, that is, the initial slot is also the reference available slot, namely, the first one of the available slots in the configured grant periodicity. ThatM=1 corresponds to a possibility B, the reference available slot is the first one of the available slots in the configured grant periodicity, and the initial slot is an available slot that is at a distance of 1*4 available slots from the reference available slot, that is, the initial slot is the fifth available slot.

That M=2 corresponds to a possibility C, the reference available slot is the first one of the available slots in the configured grant periodicity, and the initial slot is an available slot that is at a distance of 2*4 available slots from the reference available slot, that is, the initial slot is the ninth available slot.

That M=3 corresponds to a possibility D, the reference available slot is the first one of the available slots in the configured grant periodicity, and the initial slot is an available slot that is at a distance of 3*4 available slots from the reference available slot, that is, the initial slot is the thirteenth available slot.

Optionally, when the first parameter is the quantity P of available slots in the configured grant periodicity, and the first parameter is not an integer multiple of the second parameter,
the reference available slot is the first one of the available slots in the configured grant periodicity, the initial slot is the available slot that is in the configured grant periodicity and that is at the distance of M*N1 available slots from the reference available slot, and M is an integer; or the reference available slot is the last one of the available slots in the configured grant periodicity, the initial slot is the available slot that is in the configured grant periodicity and that is at the distance of M*N1-1 available slots from the reference available slot, and M is an integer greater than or equal to 1.

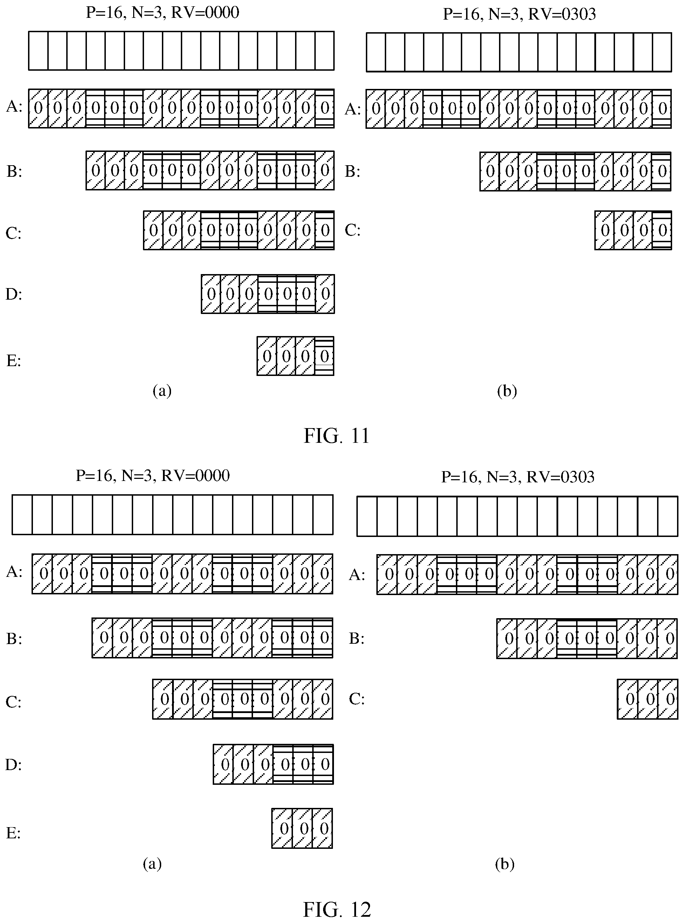

It should be noted that, that the initial slot is the available slot that is at a distance of M*N1-1 available slots from the reference available slot means that a difference between sequence numbers of the available slots is M*N1-1, that the sequence number of the initial slot may be M*N1-1 greater than the sequence number of the reference available slot, or that the sequence number of the reference available slot may be M*N1-1 greater than the sequence number of the initial slot. In an example, refer to (a) in FIG. 11. FIG. 11 is a schematic diagram of another possibility for PUSCH transmission according to an embodiment of this application. A first parameter may be a quantity P of available slots in a configured grant periodicity, where P=16, a second parameter is a quantity N of available slots in each repetition, and N=3. In this case, P is not an integer multiple of N, and a reference available slot is the first one of the available slots in the configured grant periodicity, the initial slot is an available slot that is in a configured grant periodicity and that is at a distance of M*N available slots from the reference available slot.

That M=0 corresponds to a possibility A, the initial slot is an available slot that is in a configured grant periodicity and that is at a distance of 0*3 available slots from the reference available slot, that is, the initial slot is the first available slot.

That M=1 corresponds to a possibility B, the initial slot is an available slot that is in a configured grant periodicity and that is at a distance of 1*3 available slots from the reference available slot, that is, the initial slot is the fourth available slot.

That M=2 corresponds to a possibility C, the initial slot is an available slot that is in a configured grant periodicity and that is at a distance of 2*3 available slots from the reference available slot, that is, the initial slot is the seventh available slot.

That M=3 corresponds to a possibility D, the initial slot is an available slot that is in a configured grant periodicity and that is at a distance of 3*3 available slots from the reference available slot, that is, the initial slot is the tenth available slot.

That M=4 corresponds to a possibility E, the initial slot is an available slot that is in a configured grant periodicity and that is at a distance of 4*3 available slots from the reference available slot, that is, the initial slot is the thirteenth available slot.

In another example, refer to (a) in FIG. 12. FIG. 12 is a schematic diagram of still another possibility for PUSCH transmission according to an embodiment of this application. A first parameter may be a quantity P of available slots in a configured grant periodicity, where P=16, a second parameter is a quantity N of available slots in each repetition, and N=3. In this case, P is not an integer multiple of N, and a reference available slot is the last one of the available slots in the configured grant periodicity, namely, the sixteenth available slot, the initial slot is an available slot that is in a configured grant periodicity and that is at a distance of M*N-1 available slots from the reference available slot, and M is an integer greater than or equal to 1.

That M=1 corresponds to a possibility E, the initial slot is an available slot that is in a configured grant periodicity and that is at a distance of 1*3-1 available slots from the reference available slot, that is, the initial slot is the fourteenth available slot.

That M=2 corresponds to a possibility D, the initial slot is an available slot that is in a configured grant periodicity and that is at a distance of 2*3-1 available slots from the reference available slot, that is, the initial slot is the eleventh available slot.

That M=3 corresponds to a possibility C, the initial slot is an available slot that is in a configured grant periodicity and that is at a distance of 3*3-1 available slots from the reference available slot, that is, the initial slot is the eighth available slot.

That M=4 corresponds to a possibility B, the initial slot is an available slot that is in a configured grant periodicity and that is at a distance of 4*3-1 available slots from the reference available slot, that is, the initial slot is the fifth available slot.

That M=5 corresponds to a possibility A, the initial slot is an available slot that is in a configured grant periodicity and that is at a distance of 5*3-1 available slots from the reference available slot, that is, the initial slot is the second available slot.

Optionally, the reference available slot is preset, or the reference available slot is received by the terminal device from the network device.

It should be understood that the reference available slot is preset, and it may be understood that the reference available slot is specified in a protocol.

Optionally, M=A1*N2, where A1 is an integer greater than or equal to 0, and N2 is a minimum periodicity of the RV.

It should be understood that N2 is a minimum periodicity of the RV, and the minimum periodicity is a distance between two adjacent same RVs in the RV sequence. For example, when the RV sequence is {0, 0, 0, 0}, the minimum periodicity of the RV is 1; when the RV sequence is {0, 3, 0, 3}, the minimum periodicity of the RV is 2; and when the RV sequence is {0, 3, 2, 1}, the minimum periodicity of the RV is 4.

For example, refer to (c) in FIG. 10. A sequence of the RV is {0, 3, 0, 3}, and the minimum periodicity N2=2, and M=A1*2. When A1=0, M=0, and the initial slot is an available slot that is at a distance of 0*4 available slots from the reference available slot, that is, the first available slot in a configured grant periodicity, corresponding to a possibility A.

When A1=1, and M=1*2, the initial slot is an available slot that is at a distance of 2*4 available slots from the reference available slot, that is, the ninth available slot in a configured grant periodicity, corresponding to a possibility B.

Optionally, when the first parameter or the second parameter is the quantity K of repetitions in the configured grant periodicity, M is greater than or equal to 0 and is less than or equal to K-1, and M is an integer; or when the first parameter and the second parameter are the quantity P of available slots in the configured grant periodicity and the quantity N of available slots in each repetition, M is greater than or equal to 0 and is less than or equal to floor (P/N)-1, and M is an integer.

Optionally, an RV corresponding to a repetition carried in the initial slot is 0.

For example, refer to (a) and (b) in FIG. 12. An RV corresponding to a repetition carried in an initial slot is 0.

In this technical solution, when the RV corresponding to the repetition carried the initial slot is 0, because RV0 basically includes all system bits, if sending starts from RV0, a possibility of successful decoding in advance can be improved.

Optionally, an RV corresponding to a repetition carried in the initial slot is a T^{th} RV in an RV sequence, T=floor (S/N)+1, and S is a sequence number of an initial slot in available slots in a configured grant periodicity.

It should be understood that S may start from 0, and T may start from 1. All available slots in a configured grant periodicity are numbered from 0. All the available slots herein are all P available slots or all N*K available slots.

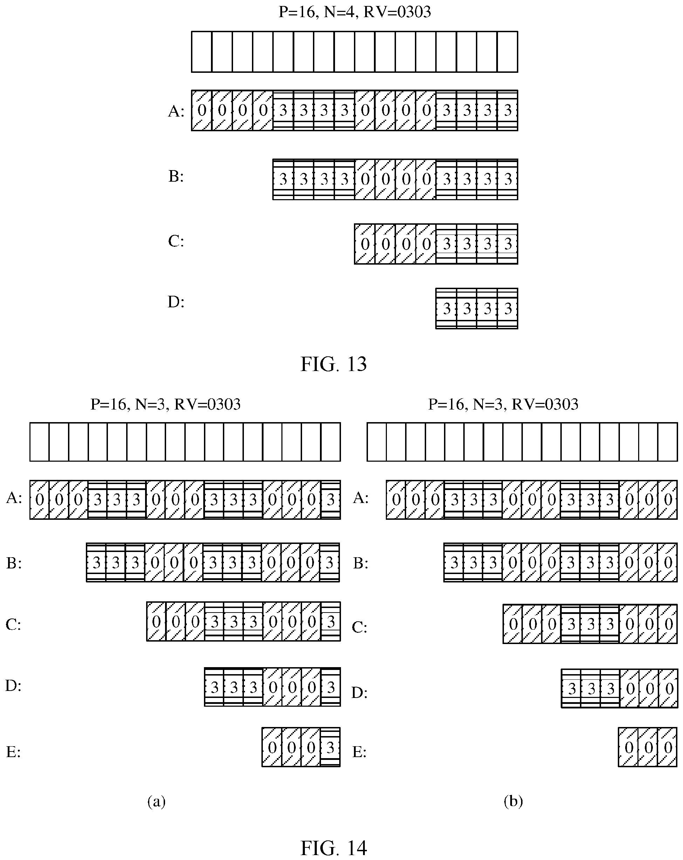

For example, FIG. 13 is a schematic diagram of yet another possibility for PUSCH transmission according to an embodiment of this application. If a quantity P of available slots in a configured grant periodicity is 16 and a quantity N of available slots included in each repetition is 4, the configured grant periodicity includes four repetitions, and the RV sequence is {0, 3, 0, 3}.

For a possibility A, if the initial slot is the first available slot in a configured grant periodicity, T=floor (0/4)+1, and an RV corresponding to the first repetition in which the initial slot is located is the first RV in the RV sequence, that is, the RV is 0.

For a possibility B, if a sequence number of the initial slot in an available slot in a configured grant periodicity is 5, T=floor (4/4)+1=2, and an RV corresponding to the second repetition in which the initial slot is located is the second RV in the RV sequence, that is, the RV is 3.

Similarly, when a sequence number of an initial slot in an available slot in a configured grant periodicity is 9, the third RV in which the initial slot is located is the third RV in the RV sequence, that is, the RV is 0.

For example, FIG. 14 is a schematic diagram of still yet another possibility for PUSCH transmission according to an embodiment of this application.

For (a) in FIG. 14, a reference available slot is the first one of available slots in a configured grant periodicity, an available slot P (P=16) in a configured grant periodicity is not an integer multiple of a number N (N=3) of available slots included in a repetition, and an RV sequence is {0, 3, 0, 3}. For a possibility A, the initial slot is the first available slot in a configured grant periodicity, that is, a sequence number of the initial slot in available slots in a configured grant periodicity is 0. In this case, T=floor (0/3)+1, and an RV corresponding to the first repetition in which the available slot corresponding to the initial slot is located is the first RV in the RV sequence, that is, the RV is 0.

For a possibility B, if a sequence number of the initial slot in an available slot in a configured grant periodicity is 4, T=floor (3/3)+1=2, and an RV corresponding to the first repetition in which the available slot corresponding to the initial slot is located is the second RV in the RV sequence, that is, the RV is 3.

Similarly, for a possibility C, an RV corresponding to the third repetition in which the initial slot is located is the third RV in the RV sequence, that is, the RV is 0. For a possibility D, an RV corresponding to the fourth repetition in which the initial slot is located is the fourth RV in the RV sequence, that is, the RV is 3. For a possibility E, an RV corresponding to the fifth repetition in which the initial slot is located is the first RV in the RV sequence, that is, the RV is 0.

For (b) in FIG. 14, a reference available slot is the last one of available slots in a configured grant periodicity, an available slot P (P=16) in a configured grant periodicity is not an integer multiple of a number N (N=3) of available slots included in a repetition, and an RV sequence is {0, 3, 0, 3}.

For a possibility A, the initial slot is the first available slot in a configured grant periodicity, that is, a sequence number of the initial slot in available slots in a configured grant periodicity is 1. In this case, T=floor (1/3)+1, and an RV corresponding to the first repetition in which the initial slot is located is the first RV in the RV sequence, that is, the RV is 0.

For a possibility B, if a sequence number of the initial slot in an available slot in a configured grant periodicity is 4, T=floor (4/3)+1, and an RV corresponding to the first repetition in which the initial slot is located is the second RV in the RV sequence, that is, the RV is 3.

Similarly, for possibilities C, D, and E, calculation may be performed in the foregoing manner. For brevity, details are not described again.

It should be understood that when P is another value, for example, P is 20, 24, 28, 32, or another value, the technical solutions in embodiments of this application are also applicable. For details, refer to the foregoing related descriptions. For brevity, details are not described again.

In this technical solution, the RV corresponding to the repetition in which the initial slot is located can be determined based on the location of the initial slot. This can simplify complexity of transmitting the PUSCH by the terminal device.

Optionally, when the RV corresponding to the repetition carried in the initial slot is not 0, an RV used in at least one of all repetitions for the transmission of the PUSCH with the configured grant is 0.

For example, refer to FIG. 13. There is no possibility D.

RV0 basically includes all system bits, and other RVs except RV0 may include only some system bits. If only the other RVs are sent, decoding may fail. This technical solution can improve a possibility of decoding in advance.

In addition, when the RV corresponding to the repetition carried in the initial slot is not 0, it can be ensured that in different possibilities, RVs used to transmit PUSCHs in a same available slot are the same. This can reduce complexity of blind detection performed by the network device. Optionally, when the first parameter is the quantity P of available slots in the configured grant periodicity, the second parameter is the quantity N of available slots in each repetition, the first parameter is not the integer multiple of the second parameter, and the reference available slot is the first one of the available slots in the configured grant periodicity, the PUSCH is not transmitted in last P-floor (P/N)*N available slots; or the method further includes:
performing encoding based on a first RV and the quantity N of available slots, where the first RV is an RV corresponding to a repetition carried in the last P-floor (P/N)*N available slots; and
transmitting a result of the encoding from front to back in the last P-floor (P/N)*N available slots.

It should be noted that, transmitting the result of the encoding from front to back in the last P-floor (P/N)*N available slots herein means that transmission starts from the first available slot in the last P-floor (P/N)*N available slots.

For example, refer to (a) in FIG. 14. The first parameter may be a number P (P=16) of available slots in a configured grant periodicity, and the second parameter may be a number N (N=4) of available slots in each repetition, that is, the first parameter is not the integer multiple of the second parameter, and the reference available slot is the first available slot in the configured grant periodicity.

The last P-floor (P/N)*N=16-floor (16/3)*3=1 available slot is not used to transmit the PUSCH. Alternatively, the terminal device encodes the PUSCH with the configured grant based on the first RV and the quantity N of available slots, where an RV corresponding to a repetition carried in the last P-floor (P/N)*N=16-floor (16/3)*3=1 available slot is 3, that is, the first RV is 3. In this case, the terminal device also encodes the PUSCH with the configured grant in the last available slot, and transmits a result of the encoding in the last available slot. In this case, a part of content may be transmitted, so that resources can be effectively utilized, and resource utilization is improved. Optionally, when the first parameter is the quantity P of available slots in the configured grant periodicity, the second parameter is the quantity K of repetitions in the configured grant periodicity, the first parameter is not the integer multiple of the second parameter, and the reference available slot is the first one of the available slots in the configured grant periodicity, the PUSCH is not transmitted in last P-floor (P/K)*K available slots; or the method further includes:
encoding the PUSCH with the configured grant based on a first RV and the quantity N of available slots, where the first RV is an RV corresponding to a repetition carried in the last P-floor (P/K)*K available slots; and
transmitting a result of the encoding from front to back in the last P-floor (P/K)*K available slots.

For the technical solution, refer to the foregoing related descriptions. For brevity, details are not described again.

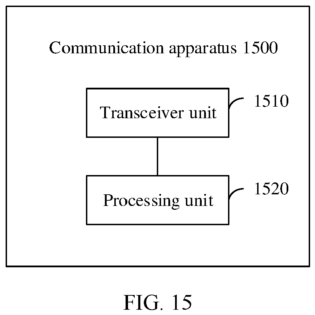

FIG. 15 is a schematic block diagram of a communication apparatus according to an embodiment of this application. As shown in FIG. 15, the communication apparatus 1500 includes a transceiver unit 1510 and a processing unit 1520.

The transceiver unit 1510 is configured to receive a first parameter and a second parameter that are sent by a network device. The processing unit 1520 is configured to determine, based on the first parameter and the second parameter, an initial slot for transmission of a physical uplink shared channel PUSCH with a configured grant. The processing unit 1520 is further configured to perform transmission of the PUSCH with the configured grant based on the initial slot. The first parameter and the second parameter are any two of the following parameters: a quantity P of available slots in a configured grant periodicity; a quantity K of repetitions in a configured grant periodicity; and a quantity N of available slots in each repetition, where N is an integer greater than or equal to 2, and one transport block cyclic redundancy check code is carried in each repetition.

Optionally, the first parameter and the second parameter are carried in radio resource control RRC signaling; or the first parameter and the second parameter are carried in activation downlink control information DCI; or the first parameter is carried in RRC signaling, and the second parameter is carried in activation DCI; or the first parameter is carried in activation DCI, and the second parameter is carried in RRC signaling.

Optionally, when the first parameter is the quantity P of available slots in the configured grant periodicity, if the second parameter is the quantity K of repetitions, the quantity P of available slots in the configured grant periodicity is an integer multiple of the quantity K of repetitions; or
if the second parameter is the quantity N of available slots in each repetition, the quantity P of available slots in the configured grant periodicity is an integer multiple of the quantity N of available slots in each repetition.

Optionally, when the first parameter and the second parameter are the quantity K of repetitions and the quantity N of available slots in each repetition, the quantity of available slots in the configured grant periodicity is K*N.

Optionally, the initial slot is an available slot that is in a configured grant periodicity and that is at a distance of M*N1 available slots from a reference available slot, where M is an integer, when the first parameter or the second parameter is the quantity N of available slots in each repetition, N1 =N, and when one of the first parameter and the second parameter is the quantity P of available slots in the configured grant periodicity, and the other is the quantity K of repetitions in the configured grant periodicity, N1 =floor (P/K) or N1=ceiling (P/K); or the initial slot is an available slot that is in a configured grant periodicity and that is at a distance of M*N1-1 available slots from a reference available slot, where M is an integer greater than or equal to 1, when the first parameter or the second parameter is the quantity N of available slots in each repetition, N1=N, and when one of the first parameter and the second parameter is the quantity P of available slots in the configured grant periodicity, and the other is the quantity K of repetitions in the configured grant periodicity, N1 =floor (P/K) or N1=ceiling (P/K).

Optionally, when the first parameter and the second parameter are the quantity K of repetitions in the configured grant periodicity and the quantity N of available slots in each repetition, or the first parameter is the quantity P of available slots in the configured grant periodicity, and the first parameter is an integer multiple of the second parameter,
the reference available slot is the first one of the available slots in the configured grant periodicity, and the initial slot is the available slot that is in the configured grant periodicity and that is at the distance of M*N1 available slots from the reference available slot.

Optionally, when the first parameter is the quantity P of available slots in the configured grant periodicity, and the first parameter is not an integer multiple of the second parameter,
the reference available slot is the first one of the available slots in the configured grant periodicity, the initial slot is the available slot that is in the configured grant periodicity and that is at the distance of M*N1 available slots from the reference available slot, and M is an integer; or the reference available slot is the last one of the available slots in the configured grant periodicity, the initial slot is the available slot that is in the configured grant periodicity and that is at the distance of M*N1-1 available slots from the reference available slot, and M is an integer greater than or equal to 1.

Optionally, the reference available slot is preset, or the reference available slot is received by a terminal device from the network device.

Optionally, the processing unit 1520 is specifically configured to determine, based on a redundancy version RV sequence, the first parameter, and the second parameter, the initial slot for the transmission of the physical uplink shared channel PUSCH with the configured grant, where the redundancy version RV sequence is received by a terminal device from the network device. Optionally, M=A1*N2, where A1 is an integer greater than or equal to 0, and N2 is a minimum periodicity of the RV.

Optionally, one RV is used in one repetition, and RVs in the RV sequence are cyclically used in all the repetitions for the transmission of the PUSCH with the configured grant.

Optionally, an RV corresponding to a repetition carried in the initial slot is 0.

Optionally, when the first parameter or the second parameter is the quantity K of repetitions in the configured grant periodicity, M is greater than or equal to 0 and is less than or equal to K-1, and M is an integer; or when the first parameter and the second parameter are the quantity P of available slots in the configured grant periodicity and the quantity N of available slots in each repetition, M is greater than or equal to 0 and is less than or equal to floor (P/N)-1, and M is an integer.

Optionally, the processing unit 1520 is specifically configured to: encode, from the repetition carried in the initial slot, the PUSCH with the configured grant based on an RV corresponding to each repetition of the transmission of the PUSCH with the configured grant, and perform transmission of the PUSCH with the configured grant based on a result of the encoding. Optionally, an RV corresponding to a repetition carried in the initial slot is 0.

Optionally, an RV corresponding to a repetition carried in the initial slot is a T^{th} RV in an RV sequence, T=floor (S/N)+1, and S is a sequence number of an initial slot in available slots in a configured grant periodicity.

Optionally, when the first parameter is the quantity P of available slots in the configured grant periodicity, the second parameter is the quantity N of available slots in each repetition, the first parameter is not the integer multiple of the second parameter, and the reference available slot is the first one of the available slots in the configured grant periodicity, the PUSCH is not transmitted in last P-floor (P/N)*N available slots; or the processing unit 1520 is further configured to:
encode the PUSCH with the configured grant based on a first RV and the quantity N of available slots, where the first RV is an RV corresponding to a repetition carried in the last P-floor (P/N)*N available slots; and
transmit a result of the encoding from front to back in the last P-floor (P/N)*N available slots.

Optionally, when the first parameter is the quantity P of available slots in the configured grant periodicity, the second parameter is the quantity K of repetitions in the configured grant periodicity, the first parameter is not the integer multiple of the second parameter, and the reference available slot is the first one of the available slots in the configured grant periodicity, the PUSCH is not transmitted in last P-floor (P/K)*K available slots; or the processing unit 1520 is further configured to:
encode the PUSCH with the configured grant based on a first RV and the quantity N of available slots, where the first RV is an RV corresponding to a repetition carried in the last P-floor (P/K)*K available slots; and
transmit a result of the encoding from front to back in the last P-floor (P/K)*K available slots.

An embodiment of this application further provides a communication apparatus, including at least one processor. The at least one processor is coupled to at least one memory, and the at least one processor is configured to execute a computer program or instructions stored in the at least one memory, so that the communication method according to any one of the foregoing embodiments is performed.

An embodiment of this application further provides a chip. The chip includes a processor and an interface circuit. The processor and the interface circuit are coupled to each other, the interface circuit is configured to communicate with another device, and a signal is processed by the processor, so that the communication method according to any one of the foregoing embodiments is performed.

An embodiment of this application further provides a computer-readable storage medium. The computer-readable storage medium stores computer instructions, and when the computer instructions are run on a computer, the communication method according to any one of the foregoing embodiments is performed.

An embodiment of this application further provides a computer program product, including computer program code. When the computer program code is run on a computer, the communication method according to any one of the foregoing embodiments is performed.

In addition, an embodiment of this application further provides an apparatus. The apparatus may be specifically a chip, an assembly, or a module. The apparatus may include a processor and a memory that are connected to each other. The memory is configured to store computer-executable instructions. When the apparatus runs, the processor may execute the computer-executable instructions stored in the memory, to enable the chip to perform the method in the foregoing method embodiments.

The communication apparatus, the computer-readable storage medium, the computer program product, or the chip provided in embodiments is configured to perform the corresponding method provided above. Therefore, for beneficial effect that can be achieved by the communication apparatus, the computer-readable storage medium, the computer program product, or the chip, refer to the beneficial effect of the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first parameter and a second parameter that are sent by a network device;
determining, by the terminal device based on the first parameter and the second parameter, an initial slot for transmission of a physical uplink shared channel PUSCH with a configured grant; and
performing, by the terminal device, transmission of the PUSCH with the configured grant based on the initial slot, wherein
the first parameter and the second parameter are any two of the following parameters:
a quantity P of available slots in a configured grant periodicity;
a quantity K of repetitions in a configured grant periodicity; and
a quantity N of available slots in each repetition, wherein N is an integer greater than or equal to 2, and one transport block cyclic redundancy check code is carried in each repetition.

2. The method according to claim 1, wherein the first parameter and the second parameter are carried in radio resource control RRC signaling; or the first parameter and the second parameter are carried in activation downlink control information DCI; or the first parameter is carried in RRC signaling, and the second parameter is carried in activation DCI; or the first parameter is carried in activation DCI, and the second parameter is carried in RRC signaling.

3. The method according to claim 1 or 2, wherein when the first parameter is the quantity P of available slots in the configured grant periodicity, if the second parameter is the quantity K of repetitions, the quantity P of available slots in the configured grant periodicity is an integer multiple of the quantity K of repetitions; or
if the second parameter is the quantity N of available slots in each repetition, the quantity P of available slots in the configured grant periodicity is an integer multiple of the quantity N of available slots in each repetition.

4. The method according to claim 1 or 2, wherein when the first parameter and the second parameter are the quantity K of repetitions and the quantity N of available slots in each repetition, the quantity of available slots in the configured grant periodicity is K*N.

5. The method according to claim 1 or 2, wherein the initial slot is an available slot that is in a configured grant periodicity and that is at a distance of M*N1 available slots from a reference available slot, wherein M is an integer, when the first parameter or the second parameter is the quantity N of available slots in each repetition, N1=N, and when the first parameter and the second parameter are the quantity P of available slots in the configured grant periodicity and the quantity K of repetitions in the configured grant periodicity, N1 =floor (P/K) or N1=ceiling (P/K); or the initial slot is an available slot that is in a configured grant periodicity and that is at a distance of M*N1-1 available slots from a reference available slot, wherein M is an integer greater than or equal to 1, when the first parameter or the second parameter is the quantity N of available slots in each repetition, N1=N, and when the first parameter and the second parameter are the quantity P of available slots in the configured grant periodicity and the quantity K of repetitions in the configured grant periodicity, N1 =floor (P/K) or N1=ceiling (P/K).

6. The method according to claim 5, wherein when the first parameter and the second parameter are the quantity K of repetitions in the configured grant periodicity and the quantity N of available slots in each repetition, or the first parameter is the quantity P of available slots in the configured grant periodicity, and the first parameter is an integer multiple of the second parameter,
the reference available slot is the first one of the available slots in the configured grant periodicity, and the initial slot is the available slot that is in the configured grant periodicity and that is at the distance of M*N1 available slots from the reference available slot.

7. The method according to claim 5, wherein when the first parameter is the quantity P of available slots in the configured grant periodicity, and the first parameter is not an integer multiple of the second parameter,
the reference available slot is the first one of the available slots in the configured grant periodicity, the initial slot is the available slot that is in the configured grant periodicity and that is at the distance of M*N1 available slots from the reference available slot, and M is an integer; or the reference available slot is the last one of the available slots in the configured grant periodicity, the initial slot is the available slot that is in the configured grant periodicity and that is at the distance of M*N1-1 available slots from the reference available slot, and M is an integer greater than or equal to 1.

8. The method according to claim 7, wherein the reference available slot is preset, or the reference available slot is received by the terminal device from the network device.

9. The method according to claim 1, wherein the determining, by the terminal device based on the first parameter and the second parameter, an initial slot for transmission of a PUSCH with a configured grant comprises:
determining, by the terminal device based on a redundancy version RV sequence, the first parameter, and the second parameter, the initial slot for transmission of the physical uplink shared channel PUSCH with the configured grant, wherein the redundancy version RV sequence is received by the terminal device from the network device.

10. The method according to any one of claims 5 to 9, wherein M=A1*N2, A1 is an integer greater than or equal to 0, and N2 is a minimum periodicity of the RV.

11. The method according to any one of claims 5 to 10, wherein an RV corresponding to a repetition carried in the initial slot is 0.

12. The method according to any one of claims 5 to 8, wherein when the first parameter or the second parameter is the quantity K of repetitions in the configured grant periodicity, M is greater than or equal to 0 and is less than or equal to K-1, and M is an integer; or when the first parameter and the second parameter are the quantity P of available slots in the configured grant periodicity and the quantity N of available slots in each repetition, M is greater than or equal to 0 and is less than or equal to floor (P/N)-1, and M is an integer.

13. The method according to claim 12, wherein an RV corresponding to a repetition carried in the initial slot is 0.

14. The method according to claim 12, wherein an RV corresponding to a repetition carried in the initial slot is a T^{th} RV in an RV sequence, T=floor (S/N)+1, and S is a sequence number of an initial slot in available slots in a configured grant periodicity.

15. The method according to claim 14, wherein when the RV corresponding to the repetition carried in the initial slot is not 0, an RV used in at least one of all repetitions for the transmission of the PUSCH with the configured grant is 0.

16. The method according to any one of claims 1 to 15, wherein one RV is used in one repetition, and RVs in the RV sequence are cyclically used in all the repetitions for the transmission of the PUSCH with the configured grant.

17. The method according to any one of claims 1 to 16, wherein the performing transmission of the PUSCH with the configured grant based on the initial slot comprises:
encoding, from the repetition carried in the initial slot, the PUSCH with the configured grant based on an RV corresponding to each repetition for the transmission of the PUSCH with the configured grant; and
performing transmission of the PUSCH with the configured grant based on a result of the encoding.

18. The method according to any one of claims 5 to 17, wherein when the first parameter is the quantity P of available slots in the configured grant periodicity, the second parameter is the quantity N of available slots in each repetition, the first parameter is not the integer multiple of the second parameter, and the reference available slot is the first one of the available slots in the configured grant periodicity, the PUSCH is not transmitted in last P-floor (P/N)*N available slots; or the method further comprises:
encoding the PUSCH with the configured grant based on a first RV and the quantity N of available slots, wherein the first RV is an RV corresponding to a repetition carried in the last P-floor (P/N)*N available slots; and
transmitting a result of the encoding from front to back in the last P-floor (P/N)*N available slots.

19. The method according to any one of claims 5 to 17, wherein when the first parameter is the quantity P of available slots in the configured grant periodicity, the second parameter is the quantity K of repetitions in the configured grant periodicity, the first parameter is not the integer multiple of the second parameter, and the reference available slot is the first one of the available slots in the configured grant periodicity, the PUSCH is not transmitted in last P-floor (P/K)*K available slots; or the method further comprises:
encoding the PUSCH with the configured grant based on a first RV and the quantity N of available slots, wherein the first RV is an RV corresponding to a repetition carried in the last P-floor (P/K)*K available slots; and
transmitting a result of the encoding from front to back in the last P-floor (P/K)*K available slots.

20. A communication apparatus, comprising:
a module configured to implement the method according to any one of claims 1 to 19.

21. A communication apparatus, comprising at least one processor, wherein the at least one processor is coupled to at least one memory, and the at least one processor is configured to execute a computer program or instructions stored in the at least one memory, so that the communication method according to any one of claims 1 to 19 is performed.

22. A chip, wherein the chip comprises a processor and an interface circuit, the processor and the interface circuit are coupled to each other, the interface circuit is configured to communicate with another device, and a signal is processed by the processor, so that the communication method according to any one of claims 1 to 19 is performed.

23. A computer-readable storage medium, wherein the storage medium stores a computer program or instructions, and when the computer program or the instructions are executed by a communication apparatus, the method according to any one of claims 1 to 19 is performed.
